# EUROPÄISCHE PATENTANMELDUNG

(11) **EP 2 650 973 A1**
(43) Veröffentlichungstag der Anmeldung: **16.10.2013**
(21) Anmeldenummer: 13162852.1
(22) Anmeldetag: 09.04.2013
(51) Int. Cl.: H01R 4/70, B29C 53/78

(54) **Stützwendel**

(30) Priorität: 10.04.2012 DE 102012103040
(71) Anmelder: REHAU AG + Co, 95111 Rehau (DE); nkt cables GmbH, 26954 Nordenham (DE)
(72) Erfinder: Koch, Bastian, 91555 Feuchtwangen (DE); Goldstein, Jörg, 95028 Hof (DE); Schwarz, Michael, 95100 Selb (DE); Meyer, Stephan, 26919 Brake (DE); Müller, Peter, 26954 Nordenham (DE)

(57) **Zusammenfassung**

Die vorliegende Erfindung betrifft eine Stützwendel, insbesondere zur Abstützung einer expandierten elastischen Muffe, umfassend wenigstens ein Profil, das spiralförmig angeordnet ist, dessen benachbarte Windungen zumindest abschnittsweise miteinander verbunden sind, so dass sich eine im Wesentlichen hohlzylindrische Form mit einer Außenfläche und einer Innenfläche ergibt, wobei an der Stirnseite des Profils wenigstens ein Halteelement und wenigstens ein Rastelmittel angeordnet ist, wobei das Rastmittel in formschlüssiger Wirkverbindung mit dem Halteelement steht, wobei das Halteelement wenigstens eine im Wesentlichen senkrecht zur Außenfläche ausgerichtete, im Querschnitt hinterschnittig ausgebildete, Öffnung aufweist und dass das Rastmittel in radiale Richtung des Stützwendels in das Halteelement einrastend ausgebildet ist.

## Beschreibung

Die vorliegende Erfindung betrifft eine Stützwendel, insbesondere zur Abstützung einer expandierten elastischen Muffe, umfassend wenigstens ein Profil, das spiralförmig angeordnet ist, dessen benachbarte Windungen zumindest abschnittsweise miteinander verbunden sind, so dass sich eine im Wesentlichen hohlzylindrische Form mit einer Außenfläche und einer Innenfläche ergibt, wobei an der Stirnseite des Profils wenigstens ein Halteelement und wenigstens ein Rastmittel angeordnet ist, wobei das Rastmittel in formschlüssiger Wirkverbindung mit dem Halteelement steht.

Um längliche, vorzugsweise zylindrische Elemente wie beispielsweise elektrische Kabelverbindungen, Verbindungen von Telekommunikationskabeln und dergleichen zu ummanteln, sind elastische Muffen bekannt, die sich selbst und ohne Erwärmung zusammenziehen und sich damit von den warm zusammenziehenden Muffen unterscheiden. Diese Muffen weisen eine elastische, röhrenförmige Struktur auf, in der alle wesentlichen funktionalen Elemente umhüllt sind, die für die besondere Anwendung notwendig sind. Vor ihrer eigentlichen Anwendung müssen die elastischen Muffen durch Aufbringen einer entsprechenden Kraft in einem expandierten Zustand gehalten werden, damit die nötigen Verbindungs- und Kontrolltätigkeiten hinsichtlich der Kabelverbindung durchgeführt werden können. Danach werden die elastischen Muffen sich selbst überlassen, wobei sie sich zusammenziehen und sich dabei der Geometrie der Kabelverbindung anpassen, so dass die Kabelverbindung verlässlich und dauerhaft allumfassend bedeckt bzw. umhüllt ist.

Um die Muffe in besagtem expandierten Zustand zu halten, wird normalerweise ein röhrenförmiges Stützteil verwendet, auf das die Muffe in ihrem elastisch expandierten Zustand aufgebracht ist. Das Stützteil wird nach Abschluss der Montage und Kontrolltätigkeiten an der Verbindungsstelle entfernt, wodurch die elastische Kontraktion der Muffe realisiert wird.

Im Stand der Technik sind verschiedene Arten derartiger Stützteile bekannt. Weit verbreitet sind Stützteile, bei denen das röhrenförmige zylindrische Stützteil aus einem Band besteht, das spiralförmig in nebeneinanderliegenden Wicklungen gewunden ist, wobei die Wicklungen miteinander verbunden sind. Das Entfernen solcher Stützteile wird dadurch realisiert, indem das Band durch die Innenseite des röhrenförmigen zylindrischen Stützteils zurückgezogen wird, so dass die Wicklungen progressiv entwunden werden. Wichtig ist hierbei, dass sich bei dem Entwinden die einzelnen, miteinander verbundenen Wicklungen leicht und effektiv voneinander trennen lassen, ohne dass es zu Rissen innerhalb einer Wicklung des Profils kommt. Oftmals werden für das Trennen der miteinander verbundenen Wicklungen definierte, maximal aufzubringende Trennkräfte vorgegeben.

Die DE 101 64 367 C1 beschreibt eine Stützwendel, welche ein Profil aus einem thermoplastisch verarbeitbarem Werkstoff umfasst, das spiralförmig in nebeneinanderliegenden Wicklungen angeordnet ist, wodurch sich eine zylindrische röhrenförmige Geometrie ergibt. Benachbarte Wicklungen sind hierbei zumindest bereichsweise stoffschlüssig miteinander verbunden. Der thermoplastisch verarbeitbare Werkstoff des Profils ist in den Bereichen der nebeneinander angeordneten Wicklungen wenigstens teilweise vernetzt. Bei der Herstellung dieser Stützwendel wird zunächst das Profil extrudiert, und anschließend erfolgt die wenigstens teilweise Vernetzung des Profils. Danach wird das Profil auf eine translatorisch und/oder rotatorisch bewegbare Achse aufgewickelt, und in einem darauf folgenden Schritt werden die entsprechend geformten spiralförmig nebeneinanderliegenden Wicklungen bis zum Erweichungspunkt des thermoplastisch verarbeitbaren Werkstoffs erwärmt. Durch besagtes Erwärmen kommt es zu einer zumindest abschnittsweisen stoffschlüssigen Verbindung zwischen benachbarten Wicklungen. Daraufhin erfolgt das Abkühlen der Wicklungen, wobei durch Aufbringen einer Kraft in axialer Richtung auf die endständigen Wicklungen während des Abkühlens die stoffschlüssige Verbindung noch forciert werden kann. Zum Ende des Herstellungsprozesses erfolgt die Entnahme der stoffschlüssig miteinander verbundenen Wicklungen.

Die wenigstens teilweise Vernetzung des thermoplastisch verarbeitbaren Werkstoffs des Profils bewirkt, dass es bei dem beschriebenen Schritt des Erwärmens des Profils bis zu seinem Erweichungspunkt zwar zu einer zumindest abschnittsweisen stoffschlüssigen Verbindung zwischen benachbarten Wicklungen kommt, die stoffschlüssige Verbindung jedoch nicht so stabil ist, wie sie bei Verwendung von unvernetztem Profilmaterial wäre. Somit ergibt sich eine steuerbare werkstoffseitige Schwachstelle, die eine Trennung benachbarter und stoffschlüssig miteinander verbundener Wicklungen jederzeit problemlos ermöglicht.

Dieser Verfahrensschritt der Vernetzung ist jedoch aufwändig und generiert zusätzliche Kosten. Das gilt gleichermaßen für den Schritt des Erwärmens des Stützteils.

Eine weitere Stützwendel ist beispielsweise in der DE 102006012593 A1 beschrieben. Diese rohrförmige, spiralförmige Halterung für das radiale Stützen von elastisch expandiertem Schlauchmaterial, das aus mindestens einem extrudierten Körper besteht, der gewickelt ist, um mehrere Wicklungen zu bilden, deren Ränder miteinander in der Längsrichtung der spiralförmigen Halterung mindestens in Abschnitten verbunden sind, soll sich dadurch auszeichnen, dass die Ränder miteinander mittels mindestens einer Laserschweißnaht verbunden sind, wobei die Laserschweißnaht einen schwachen Bereich der spiralförmigen Halterung bildet, indem die Ränder trennbar miteinander verbunden sind. Nachteilig bei dieser Stützwendel wird gesehen, dass einerseits die verwendeten laseraktivierbaren Materialien sehr preisintensiv sind und dass andererseits die Herstellung einer Stützwendel aus dem extrudierten Körper sowie das zusätzliche Laserverschweißen sehr aufwändig sind, so dass die Kosten derart gefertigter Stützwendel sehr hoch sind.

Hier setzt die Erfindung ein, die sich die Aufgabe gestellt hat, die Nachteile des Standes der Technik zu überwinden und eine Stützwendel zur Verfügung zu stellen, welche einfacher und kostengünstiger herstellbar ist, welche leichter und einfacher montierbar bzw. demontierbar ist und welche ausgehend von einem Profilquerschnitt die Herstellung von Stützwendeln in unterschiedlichsten Durchmessern ermöglicht.

Erfindungsgemäß wird diese Aufgabe durch die Merkmale des Anspruches 1 gelöst. Weitere vorteilhafte Ausgestaltungen sind in den Unteransprüchen beschrieben.

Es konnte überraschend festgestellt werden, dass eine Stützwendel, insbesondere zur Abstützung einer expandierten elastischen Muffe, umfassend wenigstens ein Profil, das spiralförmig angeordnet ist, dessen benachbarte Windungen zumindest abschnittsweise miteinander verbunden sind, so dass sich eine im Wesentlichen hohlzylindrische Form mit einer Außenfläche und einer Innenfläche ergibt, wobei an der Stirnseite des Profils wenigstens ein Halteelement und wenigstens ein Rastmittel angeordnet ist, wobei das Rastmittel in formschlüssiger Wirkverbindung mit dem Halteelement steht, sich dadurch auszeichnet, dass das Halteelement wenigstens eine im Wesentlichen senkrecht zur Außenfläche ausgerichtete, im Querschnitt hinterschnittig ausgebildete, Öffnung aufweist und dass das Rastmittel in radiale Richtung der Stützwendel in das Halteelement einrastend ausgebildet ist. Durch diese vorteilhafte Ausgestaltung der erfindungsgemäßen Stützwendel kann ausgehend von einer einfachen Querschnittsgeometrie des Profils beliebig oft über formschlüssige Verbindungen der Rastmittel bzw. der Halteelemente eine Stützwendel zur Verfügung gestellt werden.

Ein weiterer Vorteil der erfindungsgemäßen Stützwendel besteht darin, dass ausgehend von nur einem Profilquerschnitt sowohl verschiedene Längen als auch verschiedene Durchmesser der Stützwendel realisierbar sind und welche nach ihrem bestimmungsgemäßen Gebrauch jederzeit wieder zu neuen Stützwendeln montierbar sind.

Ein Vorteil der erfindungsgemäßen Stützwendel besteht darin, dass das Halteelement und /oder das Rastmittel einstückig an der Stirnseite des Profils angeordnet ist. Hierdurch ist einerseits eine wirtschaftliche sowie kostengünstige Herstellung des Profils sowie der daraus herzustellenden Stützwendel möglich und andererseits genügt die formschlüssige Wirkverbindung zwischen dem Halteelement und dem Rastmittel allen Anforderungen der entsprechenden Richtlinien bzw. gesetzlichen Vorgaben.

Eine weitere vorteilhafte Ausgestaltung der erfindungsgemäßen Stützwendel besteht darin, dass der Rastbereich der Öffnung des Halteelements im Querschnitt gesehen etwa kreisförmig, oval, prismatisch, dreieckförmig, pfeilförmig, T-förmig und dergleichen ausgebildet ist. Hierdurch lassen sich verschiedene formschlüssige Wirkverbindungen zwischen dem Halteelement und dem Rastmittel konstruktiv gestalten, mit denen die erfindungsgemäße Stützwendel unterschiedliche Anforderungen an äußere Belastungen problemlos besteht.

Es liegt jedoch auch im Rahmen der Erfindung, dass das Rastelement des Rastmittels im Querschnitt gesehen etwa kreisförmig, oval, prismatisch, dreieckförmig, pfeilförmig, T-förmig und dergleichen ausgebildet ist. Durch die Wahl der Geometrie des Halteelements sowie des Rastmittels kann die formschlüssige Wirkverbindung einfach und kostengünstig hergestellt werden, wobei gleichzeitig bei der Herstellung der erfindungsgemäßen Stützwendel durch die Abstände bzw. Toleranzen des Halteelements sowie des Rastelements und die Herstellungsparameter wie Anpresskraft des Mittels und Geschwindigkeit der Wickelachse die Stabilität und Festigkeit der formschlüssigen Wirkverbindung realisiert werden, ohne dass diese später nicht mehr voneinander trennbar sind.

Weiterhin vorteilhaft bei der erfindungsgemäßen Stützwendel wird gesehen, dass die Öffnung des Halteelements und / oder das Rastmittel etwa äquidistant von der Außenfläche und / oder der Innenfläche der Stützwendel angeordnet ist. Hierdurch ist einerseits eine kostengünstige und wirtschaftliche Herstellung des die Stützwendel bildenden Profils möglich, während andererseits die mechanische Belastung bei der Montage der Stützwendel aus dem Profil heraus reduziert ist.

Die erfindungsgemäße Stützwendel zeichnet sich weiterhin dadurch aus, dass das Rastelement des Rastmittels längsverschieblich zur Außenfläche und/oder zur Innenfläche in der Öffnung des Halteelements angeordnet ist. Durch diese vorteilhafte geometrische Ausgestaltung sowie Nutzung entsprechender Toleranzen ist es möglich, ausgehend von einer Profilgeometrie erfindungsgemäße Stützwendel mit verschiedenen Außendurchmessern zu realisieren. Weiterhin vorteilhaft ist, dass somit erstmals Stützwendel zur Verfügung gestellt werden können, die über ihre Länge unterschiedliche Außendurchmesser aufweisen.

Es kann weiterhin von Vorteil sein, wenn das Profil wenigstens teilweise einen polymeren Werkstoff aufweist. Hierdurch ist es vorteilhafterweise möglich, dass die Stützwendel später bildende Profil kostengünstig sowie wirtschaftlich herzustellen und in die gewünschte geometrische Form zu bringen. Weiterhin vorteilhaft sind die guten mechanischen sowie thermischen Eigenschaften der verschiedenen polymeren Werkstoffe. Unter thermoplastischem Werkstoff sind Materialien gemeint, wie Polyvinylchlorid (PVC); Polyolefin, wie Polypropylen (PP) oder Polyethylen (PE); styrolbasiertes Polymer, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-Styrol-Copolymere (ABS) oder Styrolacrylnitril (SAN); Polybutylentherephthalat (PBT); Polyethylentherephthalat (PET); Polyoxymethylen (POM); Polyamid (PA); Polymethylmethacrylat (PMMA); Polyphenylenoxid (PPO); Polyetheretherketon (PEEK); Polyphenylensulfid (PPS); Liquid Crystal Polymer (LCP); Polyamidimide (PAI); Polyvinylidenfluorid (PVDF); Polyphenylsulfon (PPSU); Polyaryletherketon (PAEK); Polyacrylnitril (PAN); Polychlortrifluorethylen (PCTFE); Polyetherketon (PEK); Polyimid (PI); Polyisobuten (PIB); Polyphthalamid (PPA); Polypyrrol (PPY); Polytetrafluorethylen (PTFE); Polyurethan (PUR); Polyvinylalkohol (PVA); Polyvinylacetat (PVAC); Polyvinylidenchlorid (PVDC); sowie Mischungen aus wenigstens zwei dieser Materialien. Dabei können dem thermoplastischen Werkstoff geeignete Füll-und / oder Verstärkungsstoffe beigemischt sein, die die mechanischen Eigenschaften positiv beeinflussen insbesondere Glasfaser, Glaskugeln aber auch Füllstoffe wie Kreide, Teflon und dergleichen.

Es hat sich weiterhin als sehr vorteilhaft herausgestellt, dass das Profil einstückig ausgebildet ist. Hierdurch lässt sich das Profil wirtschaftlich und kostengünstig in einem Arbeitsgang herstellen. Ein weiterer Vorteil besteht darin, dass das Profil einstückig aus einem polymeren Werkstoff sehr kostengünstig und in verschiedenen farblichen Ausgestaltungen im an sich bekannten Extrusionsprozess herstellbar ist.

Es hat sich aber ebenfalls als vorteilhaft herausgestellt, dass das Halteelement und / oder das Rastmittel aus unterschiedlichem, polymerem Werkstoff hergestellt ist. Hierdurch ist es vorteilhafterweise möglich, die formschlüssige Wirkverbindung werkstoffgerecht und anwendungsbezogen so zu dimensionieren, dass sehr einfach und kostengünstig eine erfindungsgemäße Stützwendel zur Verfügung gestellt werden kann, welche den unterschiedlichsten, insbesondere mechanischen, Belastungen problemlos gewachsen ist.

Dabei kann es durchaus vorteilhaft sein, wenn das Profil selbst eine runde, ovale, prismatische und dergleichen Querschnittsgeometrie aufweist. Hierdurch können insbesondere Anforderungen an die Festigkeiten der erfindungsgemäßen Stützwendel gegenüber dem Druck der im expandierten Zustand zu haltenden elastischen Muffe realisiert werden, sowie ein komfortables und leichtes Entwinden bzw. Demontieren der nebeneinander angeordneten Windungen.

Es hat sich zudem als vorteilhaft herausgestellt, dass das Profil wenigstens eine sich in Profillängsrichtung erstreckende Hohlkammer aufweist. Hierdurch ist es möglich, durch den reduzierten Materialaufwand das Profil wirtschaftlich und kostengünstig herzustellen.

Die Erfindung betrifft außerdem ein Verfahren zur Herstellung einer Stützwendel nach zumindest einer der vorangegangenen vorteilhaften Ausgestaltungen, umfassend die folgenden Schritte:
- Extrusion / Koextrusion des Profils mit einem Halteelement und einem Rastmittel, wobei das Halteelement wenigstens eine im Wesentlichen senkrecht zur Außenfläche angeordnete, im Querschnitt hinterschnittig ausgebildete, Öffnung aufweist und einem am Rastmittel angeordneten Rastelement
- Anordnen des Profils in einer Spiralform mit nebeneinander liegenden Windungen
- radiales, rastendes Einbringen des Rastmittels in die Öffnung des Halteelements.

Es hat sich weiterhin als vorteilhaft herausgestellt, dass das Anordnen des Profils in einer Spiralform mit nebeneinanderliegenden Windungen durch gleichzeitiges Wickeln des Profils auf eine translatorisch und / oder rotatorisch bewegbare Achse erfolgt. Hierdurch ist es möglich, das Profil sehr einfach und effizient spiralförmig anzuordnen und daraus die erfindungsgemäße Stützwendel herzustellen.

Hierbei kann es sehr vorteilhaft sein, wenn in einem weiteren Schritt die Entnahme der in formschlüssiger Wirkverbindung miteinander stehenden Rastmittel und Halteelemente der nebeneinander liegenden Windungen von besagter bewegbarer Achse erfolgt.

Ein weiterer Vorteil des Verfahrens wird darin gesehen, dass das Anordnen des Profils in einer Spiralform mit nebeneinander liegenden Windungen durch Winden des Profils erfolgt. Hierdurch ist es nicht erforderlich, eine bewegbare Achse bzw. einen Dorn zu verwenden, auf welche das Profil aufgewickelt wird und es entfällt ebenso der Schritt des Abziehens bzw. der Entnahme der so hergestellten erfindungsgemäßen Stützwendel.

Ein weiterer Vorteil des Verfahrens wird darin gesehen, dass die formschlüssige Wirkverbindung benachbarter Windungen während des Wickelns bzw. während des Windens realisiert wird. Hierdurch kann ein kostengünstiges, wirtschaftliches und schnelles Herstellen der erfindungsgemäßen Stützwendel realisiert werden.

Es kann weiterhin sehr vorteilhaft sein, dass die formschlüssige Wirkverbindung benachbarter Windungen durch die Aufbringung einer radial wirkenden Kraft auf das Rastmittel mit Hilfe eines Mittels erfolgt. Dieses Mittel kann beispielsweise ein an einer Vorrichtung angeordneter Dorn sein, der dazu dient, dass das Rastmittel in die Öffnung des Halteelements während des Windens bzw. Wickelns des Profils eingebracht wird.

Es liegt jedoch auch im Rahmen der Erfindung, dass das Mittel, welches die radial wirkende Kraft auf das Rastmittel ausübt, eine translatorisch und / oder rotatorisch bewegbare Anpresswalze ist, die über eine zusätzliche Vorrichtung so gesteuert wird, dass das Rastmittel über diese radial wirkende Kraft in die Öffnung des Halteelements eingebracht und so die formschlüssige Wirkverbindung benachbarter Windungen realisiert wird.

Dabei kann es günstig sein, wenn die radial wirkende Kraft in einem Bereich von etwa 1 N bis zu 500 N, vorzugsweise von 10 bis 150 N, dimensioniert ist. Diese Kräfte sind vorteilhafterweise ausreichend, um eine formschlüssige Wirkverbindung zu realisieren, ohne dass das Halteelement und / oder das Rastmittel mechanisch geschädigt werden.

Die Erfindung soll nun an diesen nicht einschränkenden Ausführungsbeispielen näher beschrieben werden.

Es zeigen:
- Fig. 1: perspektivische Darstellung einer erfindungsgemäßen Stützwendel mit darauf aufgebrachter elastischer Muffe
- Fig. 2: Schnittdarstellung einer aus dem Profil hergestellten erfindungsgemäßen Stützwendel
- Fig. 3: Darstellung des Wickelns des Profils mit gleichzeitig eingebrachter radial wirkender Kraft
- Fig. 4: Darstellung des Windens des Profils mit gleichzeitig eingebrachter radial wirkender Kraft.

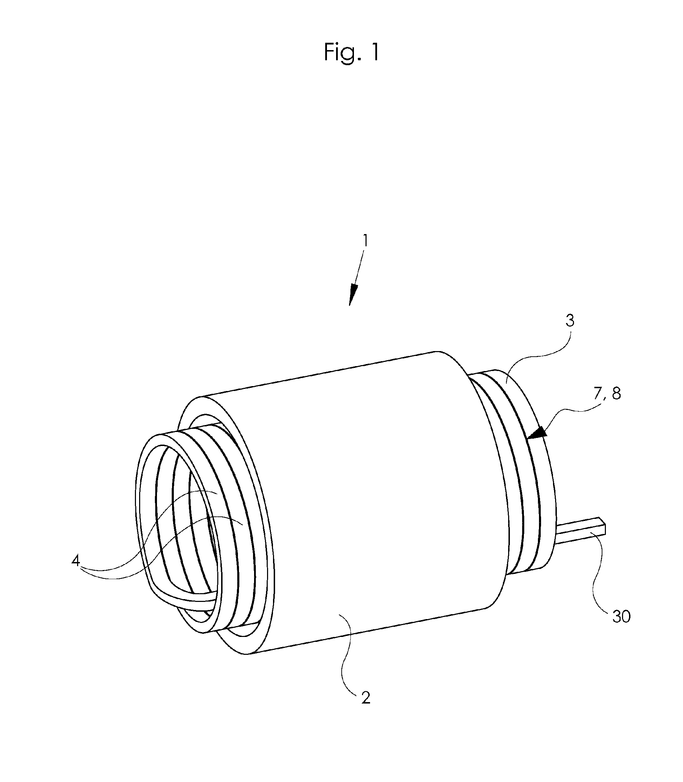

Die Fig. 1 zeigt eine erfindungsgemäße Stützwendel 1, welche eine elastische Muffe 2 in einem expandierten Zustand hält bzw. diese unterstützt. Die erfindungsgemäße Stützwendel 1 besteht in diesem Ausführungsbeispiel aus einem Profil 3, das spiralförmig angeordnet ist, dessen benachbarte Windungen 4 zumindest abschnittsweise miteinander verbunden sind, so dass sich eine im Wesentlichen hohlzylindrische Form ergibt. Die erfindungsgemäße Stützwendel 1 weist an ihrer einen Stirnseite ein freies Ende 30 des Profils 3 auf, welche nicht über die nebeneinander angeordneten Windungen 4 verbunden ist, sondern welche sich axial in etwa parallel zur Mittelachse der erfindungsgemäßen Stützwendel 1 in dem durch die benachbarten Windungen 4 gebildeten Hohlraum erstreckt und an einem freien Ende der erfindungsgemäßen Stützwendel 1 hinausragt.

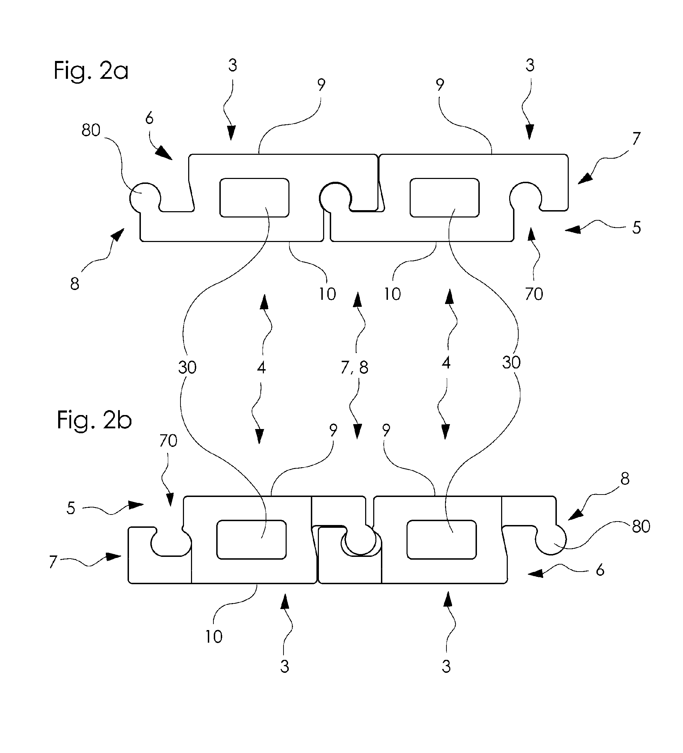

In der Fig. 2 sind Schnittdarstellungen nebeneinander angeordneter Windungen 4 der erfindungsgemäßen Stützwendel 1 dargestellt.

Die erfindungsgemäße Stützwendel 1 umfasst wenigstens ein Profil 3, das spiralförmig angeordnet ist, dessen benachbarte Windungen 4 zumindest abschnittsweise miteinander verbunden sind, so dass sich eine im Wesentlichen hohlzylindrische Form mit einer Außenfläche 9 und einer Innenfläche 10 ergibt, wobei an der Stirnseite 5, 6 des Profils 3 wenigstens ein Halteelement 7 und wenigstens ein Rastmittel 8 angeordnet ist, wobei das Rastmittel in formschlüssiger Wirkverbindung mit dem Halteelement 7 steht.

Das Halteelement 7 weist wenigstens eine im Wesentlichen zur Außenfläche 9 ausgerichtete, im Querschnitt hinterschnittig ausgebildete, Öffnung 70 auf und das Rastmittel 8 ist so ausgebildet, dass es in radiale Richtung der Stützwendel 1 in das Halteelement 7 einrastend ausgebildet ist.

Die Schnittdarstellungen in der Fig. 2 unterscheiden sich dadurch, dass bei der oberen Darstellung 2a das Halteelement 7 eine im Wesentlichen senkrecht zur Innenfläche 10 ausgerichtete, im Querschnitt hinterschnittig ausgebildete, Öffnung 70 aufweist, während in der unteren Abbildung 2b das Halteelement 7 wenigstens eine im Wesentlichen senkrecht zur Außenfläche 9 ausgerichtete, im Querschnitt hinterschnittig ausgebildete, Öffnung 70 aufweist.

In der oberen Fig. 2a ist das Halteelement 7 und das Rastmittel 8 einstückig an der Stirnseite 5, 6 des Profils angeordnet. Der Rastbereich der Öffnung 70 des Halteelements 7 ist im Querschnitt gesehen in diesem Ausführungsbeispiel etwa kreisförmig ausgebildet.

Das an der dem Halteelement 7 gegenüberliegenden Stirnseite 6 des Profils 3 angeordnete Rastmittel 8 weist in diesem Ausführungsbeispiel ein Rastelement 80 auf, welches im Querschnitt gesehen etwa kreisförmig ausgebildet ist.

Die Öffnung 70 des Halteelements 7 sowie das Rastmittel 8 sind etwa äquidistant von der Außenfläche 9 bzw. der Innenfläche 10 beabstandet angeordnet.

Die Öffnung 70 des Halteelements 7 bzw. das Rastelement 80 des Rastmittels 8 ist in diesem Ausführungsbeispiel so dimensioniert, dass beide längsverschieblich sind, so dass das Rastelement 80 und das Halteelement 7 in Profillängsrichtung des Profils 3 verschiebbar sind und somit die erfindungsgemäße Stützwendel 1 in unterschiedlichen Außendurchmessern herstellbar ist.

In diesem Ausführungsbeispiel gemäß der Fig. 2a ist das Profil 3 aus einem polymeren Werkstoff hergestellt, ausgewählt aus der Gruppe der Polyolefine, insbesondere aus Polyethylen.

Das Profil 3 ist im Querschnitt etwa prismatisch, insbesondere viereckig ausgebildet und weist in Profillängsrichtung eine Hohlkammer 30 auf, welche parallel zu der Außenfläche 9 bzw. zur Innenfläche 10 angeordnet ist. In diesem Ausführungsbeispiel ist das Profil 3 einstückig ausgebildet, so dass das Profil 3, das Halteelement 7 sowie das Rastelement 8 aus dem gleichen, insbesondere polymeren, Werkstoff hergestellt ist.

Im Gegensatz dazu unterscheidet sich das in der Fig. 2b dargestellte Ausführungsbeispiel weiterhin dadurch, dass das Halteelement 7 sowie das Rastmittel 8 aus einem unterschiedlichen Werkstoff hergestellt ist.

Das Rastmittel 8 ist in diesem Ausführungsbeispiel einstückig an der Stirnseite 6 des Profils 3 angeordnet und aus einem polymeren Werkstoff, ausgewählt aus der Gruppe der Polyolefine, insbesondere aus einem Polyethylen hergestellt.

Das dem Rastmittel 8 an der gegenüberliegenden Stirnseite 5 des Profils 3 angeordnete Halteelement 7 ist in diesem Ausführungsbeispiel ebenfalls aus einem polymeren Werkstoff hergestellt, ausgewählt aus der Gruppe der thermoplastischen Elastomere wie bspw. auf Olefinbasis und/oder auf Urethanbasis, der vernetzten thermoplastischen Elastomere auf Olefinbasis, der Thermoplastischen Copolyester, der Styrol-Blockcopolymere (SBS, SEBS, SEPS, SEEPS und MBS) sowie der Thermoplastischen Copolyamide, der weihmacherhaltigen Werkstoffe, bevorzugt Polypropylen, Acrylnitril-Butadien-Styrol-Copolymerisat, Polycarbonat, Polyvinylchlorid, Polymethylmethacrylat, Polyethylenterephthalat, Polyurethan und dgl., sowie aus Mischungen dieser Werkstoffe.

Durch diese vorteilhafte Ausgestaltung der Werkstoffe des Halteelements 7 bzw. des Rastmittels 8 ist eine kostengünstige und wirtschaftliche Herstellung des Profils 3 möglich und eine schnelle und effiziente Montage der erfindungsgemäßen Stützwendel 1.

Die Öffnung 70 des Halteelements 7 sowie das Rastmittel 8 sind in diesem Ausführungsbeispiel etwa äquidistant von der Außenfläche 9 sowie der Innenfläche 10 der erfindungsgemäßen Stützwendel 1 angeordnet.

Es liegt jedoch auch im Rahmen der Erfindung, dass die Öffnung 70 des Halteelements 7 sowie das Rastmittel 8 in unterschiedlichen Abständen von der Außenfläche 9 bzw. der Innenfläche 10 der erfindungsgemäßen Stützwendel 1 angeordnet sein können.

Der Rastbereich der Öffnung 70 des Halteelements 7 ist in diesem Ausführungsbeispiel im Querschnitt gesehen etwa oval ausgebildet, während das Rastelement 80 des Rastmittels 8 im Querschnitt etwa kreisförmig ausgebildet ist. Durch diese vorteilhafte Ausgestaltung des Halteelements 7 bzw. des Rastmittels 8 ist eine einfache Montage der aus dem Profil 3 hergestellten durch benachbarte Windungen 4 gebildeten erfindungsgemäßen Stützwendel 1 gewährleistet.

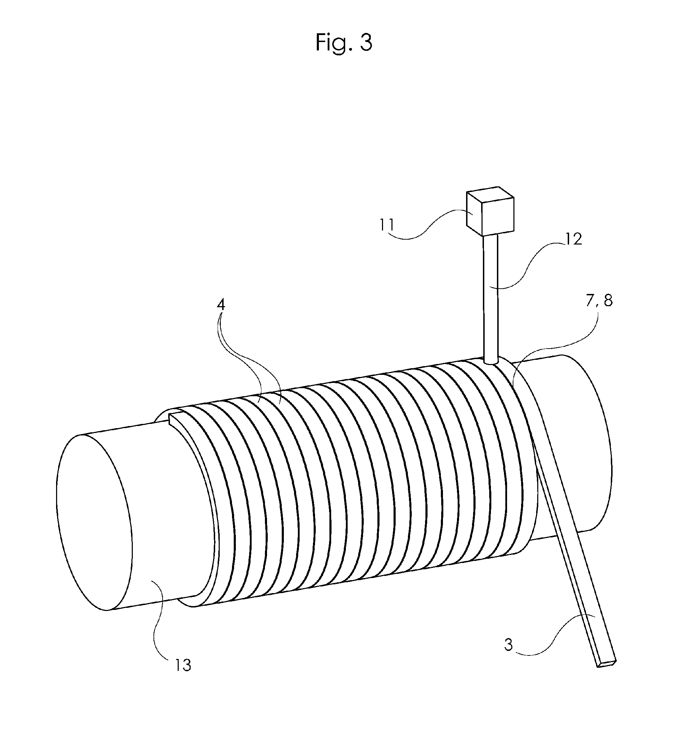

Die Fig. 3 stellt den Verfahrensschritt des Wickelns des Profils 3 beim gleichzeitigen Herstellen der nebeneinander liegenden Windungen 4 auf einer rotatorisch bewegten Achse 13 dar. Durch den Durchmesser der rotatorisch bewegten Achse 13 wird der Innendurchmesser der erfindungsgemäßen Stützwendel 1 definiert.

Durch die Zuführung des Profils 3 mit einer definierten translatorischen Geschwindigkeit ergeben sich die Steigungen der nebeneinander angeordneten Windungen 4.

Dabei wird durch das Mittel 12 eine radial wirkende Kraft auf das Rastmittel 8 aufgebracht, so dass sich das Rastmittel 8 zu einer formschlüssigen Wirkverbindung mit dem Halteelement 7 führen lässt. Dabei wird das nicht dargestellte Rastelement 80 des Rastmittels 8 in die hier ebenfalls nicht sichtbare Öffnung 70 des Halteelements 7 eingepresst, so dass die formschlüssige Wirkverbindung entsteht und aus dem linearen Profil 3 die erfindungsgemäße Stützwendel 1 hergestellt wird.

Das Mittel 12 ist in diesem Ausführungsbeispiel ein an der Anpressvorrichtung 11 angeordneter Dorn, der je nach Zuführung des Profils 3 auf der der Öffnung 70 des Halteelements 7 gegenüberliegenden Fläche des Profils 3 angeordnet ist und dazu führt, dass das Rastelement 80 des Rastmittels 8 formschlüssig in der Öffnung 70 des Halteelements 7 einrastet.

Es liegt jedoch auch im Rahmen der Erfindung, dass das Mittel 12 auf der dem Rastelement 80 des Rastmittels 8 gegenüberliegenden Fläche des Profils 3 angeordnet ist und durch die radial wirkende Kraft zur formschlüssigen Wirkverbindung zwischen dem Halteelement 7 und dem Rastmittel 8 beiträgt.

Nachdem die nebeneinanderliegenden Windungen 4 so miteinander verbunden sind, dass die Länge der erfindungsgemäßen Stützwendel 1 erreicht ist, wird das Mittel 12 über die Zuführvorrichtung 11 zurückgesetzt und die rotatorische Bewegung der Achse 13 gestoppt, so dass die nun formschlüssig miteinander verbundenen Windungen 4 von der Achse 13 entnommen werden können.

In diesem Ausführungsbeispiel wird die Achse 13 rotatorisch bewegt, während das die radial wirkende Kraft aufbringende Mittel 12, welches an der Vorrichtung 11 angeordnet ist, translatorisch parallel zur Achse 13 bewegt wird, so dass das Mittel 12 immer in der Position der benachbarten Windungen 4 am Rastmittel 8 und / oder am Halteelement 7 positioniert ist und zur formschlüssigen Wirkverbindung über die radial wirkende Kraft führt.

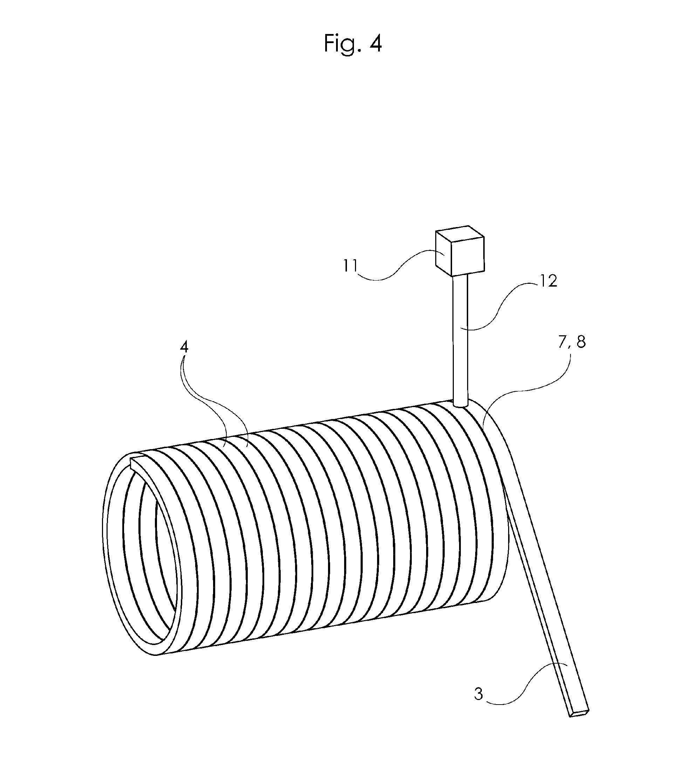

In der Fig. 4 ist das Verfahren zum Winden des Profils mit gleichzeitig stattfindender Herstellung der formschlüssigen Wirkverbindung dargestellt.

Hierbei werden nebeneinander liegende Windungen 4 ohne die Verwendung einer Achse 13 gewickelt, indem das Rastmittel 8 in die Öffnung 70 des Halteelements 7 eingebracht wird unter Zuhilfenahme eines Mittels 12, welches an einer Vorrichtung 11 angeordnet ist. Das Mittel 12 ist in diesem Ausführungsbeispiel eine der Kontur des Profils 3 angepasste drehbar gelagerte Rolle, welche eine radial wirkende Kraft beispielsweise auf das Rastmittel 8 ausübt und so dazu führt, dass die formschlüssige Wirkverbindung hergestellt wird. Es liegt jedoch auch im Rahmen der Erfindung, dass das Mittel 12 auf die der Öffnung 70 des Halteelements 7 gegenüberliegende Fläche des Profils 3 eine radial wirkende Kraft aufbringt und so zur formschlüssigen Wirkverbindung des Halteelements 7 mit dem Rastmittel 8 führt.

In diesem Ausführungsbeispiel ist das an der Vorrichtung 11 angeordnete Mittel 12 feststehend angeordnet und positionsbestimmt, während der aus dem Profil 3 über die nebeneinander liegend angeordneten Windungen 4 entstehende Körper translatorisch und rotatorisch an der Vorrichtung 11 vorbeigeführt wird.

Die formschlüssige Wirkverbindung zwischen dem Halteelement 7 und dem Rastmittel 8 wird somit während des Wickelns realisiert. Dabei kann das Profil 3 so angeordnet sein, dass das Halteelement 7 wenigstens eine im Wesentlichen senkrecht zur Außenfläche 9 ausgerichtete, im Querschnitt hinterschnittig ausgebildete, Öffnung 70 aufweist oder auch dass das Halteelement 7 wenigstens eine im Wesentlichen senkrecht zur Innenfläche 10 ausgerichtete, im Querschnitt hinterschnittig ausgebildete, Öffnung 70 aufweist.

## Patentansprüche

1. Stützwendel (1), insbesondere zur Abstützung einer expandierten elastischen Muffe (2), umfassend wenigstens ein Profil (3), das spiralförmig angeordnet ist, dessen benachbarte Windungen (4) zumindest abschnittsweise miteinander verbunden sind, so dass sich eine im Wesentlichen hohlzylindrische Form mit einer Außenfläche (9) und einer Innenfläche (10) ergibt, wobei an der Stirnseite (5, 6) des Profils (3) wenigstens ein Halteelement (7) und wenigstens ein Rastmittel (8) angeordnet ist, wobei das Rastmittel (8) in formschlüssiger Wirkverbindung mit dem Halteelement (7) steht, **dadurch gekennzeichnet, dass** das Halteelement (7) wenigstens eine im Wesentlichen senkrecht zur Außenfläche (9) und/oder zur Innenfläche (10) ausgerichtete, im Querschnitt hinterschnittig ausgebildete, Öffnung (70) aufweist und dass das Rastmittel (8) in radiale Richtung des Stützwendels (1) in das Haltelement (7) einrastend, ausgebildet ist.

2. Stützwendel nach Anspruch 1, **dadurch gekennzeichnet, dass** das Haltelement (7) und / oder das Rastmittel (8) einstückig an der Stirnseite (5, 6) des Profils (3) angeordnet ist.

3. Stützwendel nach einem der vorangegangenen Ansprüche, **dadurch gekennzeichnet, dass** der Rastbereich der Öffnung (70) des Haltelements (7) und/oder das Rastelement (80) des Rastmittels (8) im Querschnitt gesehen etwa kreisförmig, oval, prismatisch, dreieckförmig, pfeilförmig, T-förmig und dergleichen ausgebildet ist.

4. Stützwendel nach einem der vorhergehenden Ansprüche, **dadurch gekennzeichnet, dass** die Öffnung (70) des Halteelements (7) und / oder das Rastmittel (8) etwa äquidistant von der Außenfläche (9) und / oder der Innenfläche (10) angeordnet ist.

5. Stützwendel nach einem der vorhergehenden Ansprüche, **dadurch gekennzeichnet, dass** das Rastmittel (8) längsverschieblich zur Außenfläche (9) und/oder zur Innenfläche (10) in der Öffnung (70) des Halteelements (7) angeordnet ist.

6. Stützwendel nach einem der vorhergehenden Ansprüche, **dadurch gekennzeichnet, dass** das Profil (3) einstückig ausgebildet ist.

7. Verfahren zur Herstellung einer Stützwendel umfassend die folgenden Schritte:
- Extrusion / Koextrusion des Profils (3) mit einem Halteelement (7) und einem Rastmittel (8), wobei das Halteelement (7) wenigstens eine im Wesentlichen senkrecht zur Außenfläche (9) und/oder Innenfläche (10) angeordnete, im Querschnitt hinterschnittig ausgebildete, Öffnung (70) aufweist und einem Rastmittel (8)
- Anordnen des Profils (3) in einer Spiralform mit nebeneinander liegenden Windungen (4)
- radiales, rastendes Einbringen des Rastmittels (8) in die Öffnung (70) des Halteelements (7).

8. Verfahren nach Anspruch 7, **dadurch gekennzeichnet, dass** das Anordnen des Profils (3) in einer Spiralform mit nebeneinander liegenden Windungen (4) durch gleichzeitiges Wickeln des Profils (3) auf eine translatorisch und / oder rotatorisch bewegbare Achse (13) erfolgt.

9. Verfahren nach Anspruch 8, **gekennzeichnet durch** den weiteren Schritt der Entnahme der **durch** die formschlüssiger Wirkverbindung miteinander stehenden Rastmittel (8) und Halteelemente (7) nebeneinander liegenden Windungen (4).

10. Verfahren nach Anspruch 7, **dadurch gekennzeichnet, dass** das Anordnen des Profils (3) in einer Spiralform mit nebeneinander liegenden Windungen (4) durch Winden des Profils (3) erfolgt.

11. Verfahren nach einem der Ansprüche 7 bis 10, **dadurch gekennzeichnet, dass** die formschlüssige Wirkverbindung benachbarter Windungen (4) während des Wickelns bzw. während des Windens realisiert wird.

12. Verfahren nach einem der Ansprüche 7 bis 11, **dadurch gekennzeichnet, dass** die formschlüssige Wirkverbindung benachbarter Windungen (4) durch die Aufbringung einer radial wirkenden Kraft auf das Rastmittel (8) und/oder das Halteelement (8) mit Hilfe eines Mittels (12) erfolgt.
